# EUROPEAN PATENT APPLICATION

(11) **EP 2 028 705 A1**
(43) Date of publication of application: **25.02.2009**
(21) Application number: 07742330.9
(22) Date of filing: 18.04.2007
(51) Int. Cl.: H01M 4/58, H01M 4/62

(54) **POWDER FOR POSITIVE ELECTRODE AND POSITIVE ELECTRODE COMPOSITE**

(30) Priority: 21.04.2006 JP 2006117615; 30.08.2006 JP 2006233387
(71) Applicant: Sumitomo Chemical Company, Limited, Tokyo 104-8260 (JP)
(72) Inventor: TANINO, Kazuyuki, Tsukuba-shi Ibaraki 305-0005 (JP); SASAKI, Reiko, Ikoma-gun Nara 636-0904 (JP); YOSHIDA, Takashi, Yokosuka-shi Kanagawa 239-0807 (JP); KAWAKAMI, Yoshihiro, Ehime (JP)
(74) Representative: Hart-Davis, Jason
(86) International application number: PCT/JP2007/058895
(87) International publication number: WO 2007/123248

(57) **Abstract**

The powder for a positive electrode of the present invention comprises a positive electrode active material powder comprising primary particles and aggregated particles of primary particles, 90% or more of particles out of primary particles and aggregated particles of primary particles in the powder having a particle diameter of 0.01 µm or more and 5 µm or less, and comprises a graphite powder comprising graphite particles, 90% or more of particles out of graphite particles in the powder having a particle diameter of 0.1 µm or more and 10 µm or less as a maximum particle diameter. When the powder for a positive electrode is used for a nonaqueous electrolyte secondary battery, it becomes possible to exhibit a high discharge capacity and also exhibit a high output at a high current rate.

## Description

### TECHNICAL FIELD

The present invention relates to a powder for a positive electrode, and positive electrode mix. Particularly, the present invention relates to a powder for a positive electrode comprising a positive electrode active material powder and a graphite powder, and a positive electrode mix.

### BACKGROUND ART

A powder for a positive electrode, which contains a positive electrode active material powder and a graphite powder, is used for a nonaqueous electrolyte secondary battery such as a lithium secondary battery. The nonaqueous electrolyte secondary battery is practically used as a power source for cellular phones and the attempts are made to apply the nonaqueous electrolyte secondary battery for laptop computers, and are attempted to use for middle-sized and large-sized applications such as automobiles and electric power storage units.

Japanese Unexamined Patent Publication No. 11-40140 expressly describes, as a conventional powder for a positive electrode, a powder for a positive electrode containing a positive electrode active material having an average particle diameter of 9.1 µm to 20.5 µm and graphite having an average particle diameter of 3.3 µm to 51.5 µm.

### DISCLOSURE OF THE INVENTION

However, a nonaqueous electrolyte secondary battery obtained by using a conventional powder for a positive electrode is not sufficient in applications requiring a high output at a high current rate, that is, automobile applications and power tool applications such as electric tools, since a positive electrode has a high internal resistance value. An object of the present invention is to provide a powder for a positive electrode useful for a nonaqueous electrolyte secondary battery which exhibits a high discharge capacity and also exhibits a high output at a high current rate, and a positive electrode mix comprising the powder for a positive electrode and a binder.

Under such a circumstance, the present inventors have intensively studied and have found that a nonaqueous electrolyte secondary battery obtained by using a specific powder for a positive electrode or a positive electrode mix comprising the powder for a positive electrode and a binder can exhibit a high discharge capacity and also can exhibit a high output at a high current rate, and thus the present invention has been completed.

That is, the present invention includes the following inventions.
<1> A powder for a positive electrode comprising, a positive electrode active material powder which comprises primary particles and aggregated particles of primary particles, wherein 90% or more of primary particles and aggregated particles of primary particles in the powder has a particle diameter of 0.01 µm or more and 5 µm or less, and a graphite powder which comprises graphite particles, wherein 90% or more of graphite particles in the powder has a particle diameter of 0.1 µm or more and 10 µm or less as a maximum particle diameter.
<2> The powder for a positive electrode according to <1>, wherein the average particle diameter of primary particles and aggregated particles of primary particles in the positive electrode active material powder is 0.1 µm or more and 3 µm or less.
<3> The powder for a positive electrode according to <1> or <2>, wherein an average value of a maximum particle diameter of graphite particles in the graphite powder is 1 µm or more and 6 µm or less.
<4> The powder for a positive electrode according to any one of <1> to <3>, wherein graphite particles are scaly graphite particles.
<5> The powder for a positive electrode according to any one of <1> to <4>, wherein the composition of the positive electrode active material is represented by the formula (1):

   Liₓ₁Ni_{1-y1}M¹_{y1}O₂ (1)

   (in the formula (1), x1 and y1 satisfy 0.9 ≦ x1 ≦ 1.2 and 0 ≦ y1 ≦ 0.5, respectively, and M¹ is Co).
<6> The powder for a positive electrode according to any one of <1> to <4>, wherein the composition of the positive electrode active material is represented by the formula (2):

   Liₓ₂Ni_{1-y2}M²_{y2}O₂ (2)

   (in the formula (2), x2 and y2 satisfy 0.9 ≦ x2 ≦ 1.2 and 0.3 ≦ y2 ≦ 0.9, respectively, and M² is Co and Mn).
<7> The powder for a positive electrode according to any one of <1> to <6>, further containing a nongraphite carbonaceous material.
<8> The powder for a positive electrode according to any one of <1> to <7>, further containing a fibrous carbon material.
<9> A method for producing a powder for a positive electrode comprising mixing a positive electrode active material powder which comprises primary particles and aggregated particles of primary particles, wherein 90% or more of primary particles and aggregated particles of primary particles in the powder has a particle diameter of 0.01 µm or more and 5 µm or less, and a graphite powder which comprises graphite particles, wherein 90% or more of graphite particles in the powder has a particle diameter of 0.1 µm or more and 10 µm or less as a maximum particle diameter.
<10> The method for producing a powder for a positive electrode according to <9>, wherein a BET specific surface area of the positive electrode active material powder is 1 m²/g or more and 7 m²/g or less.
<11> The method for producing a powder for a positive electrode according to <9> or <10>, wherein a BET specific surface area of the graphite powder is 12 m²/g or more and 20 m²/g or less.
<12> The method for producing a powder for a positive electrode according to any one of <9> to <11>, wherein the amount of the graphite powder is 5 parts by weight or more and 20 parts by weight or less based on 100 parts by weight of the positive electrode active material powder.
<13> The method for producing a powder for a positive electrode according to any one of <9> to <12>, further mixing a nongraphite carbonaceous material.
<14> The method for producing a powder for a positive electrode according to any one of <9> to <13>, further mixing a fibrous carbon material.
<15> A positive electrode mix, comprising the powder for a positive electrode according to any one of <1> to <8> or the powder for a positive electrode obtained by the production method according to any one of <9> to <14>, and a binder.
<16> A positive electrode for a nonaqueous electrolyte second battery, comprising the powder for a positive electrode according to any one of <1> to <8> or the powder for a positive electrode obtained by the production method according to any one of <9> to <14>, and a binder.
<17> A nonaqueous electrolyte secondary battery, comprising the positive electrode for a nonaqueous electrolyte secondary battery according to <16>.

### BEST MODE FOR CARRYING OUT THE INVENTION

A powder for a positive electrode of the present invention comprises a positive electrode active material powder which comprises primary particles and aggregated particles of primary particles, wherein 90% or more of primary particles and aggregated particles of primary particles in the powder has a particle diameter of 0.01 µm or more and 5 µm or less, and a graphite powder which comprises graphite particles, wherein 90% or more of graphite particles in the powder has a particle diameter of 0.1 µm or more and 10 µm or less as a maximum particle diameter.

In the present invention, the particle diameter of primary particles and aggregated particles of primary particles in the positive electrode active material powder, a value measured by a scanning electron micrograph is used. From primary particles and aggregated particles of primary particles, 50 particles are selected randomly on the micrograph and then each particle diameter is measured. If the particle diameter of 90% or more particles, that is, 45 or more particles is 0.01 µm or more and 5 µm or less, the powder is a positive electrode active material powder in the present invention. As used herein, particles in the positive electrode active material powder mean primary particles and aggregated particles of primary particles. When these primary particles and aggregated particles of primary particles are spherical, a diameter of a circle on a scanning electron micrograph is measured and the measured diameter may be taken as the above particle diameter. When the primary particles and aggregated particles of primary particles have a shape other than spherical, a length (diameter) is measured any arbitrary several directions in the scanning electron micrograph, for example, two directions of the longest direction and the shortest direction, and then the measured average value may be taken as the above particle diameter. Also as the particle diameter of graphite particles in the graphite powder, which shows a maximum value, a value measured by the scanning electron micrograph is used. That is, 50 particles are selected randomly from graphite particles on the micrograph and a particle diameter which exhibits a maximum value in each particle diameter of graphite particles (hereinafter may be referred to as a maximum diameter of graphite particles) is measured. If the maximum diameter of 90% or more graphite particles, that is, 45 or more graphite particles is 0.1 µm or more and 10 µm or less, the powder is a graphite powder in the present invention. When the graphite particles are spherical, a diameter of a circle on the scanning electron micrograph is measured and the measured diameter may be taken as the above maximum diameter. In the present invention, by adjusting the particle diameter of particles in the positive electrode active material powder and the graphite powder, it is possible to obtain a powder for a positive electrode for a nonaqueous electrolyte secondary battery, which can exhibit a high discharge capacity and can also exhibit a high output at a high current rate. When the number of particles having a particle diameter of less than 0.01 µm in the positive electrode active material powder is 10% or more, compatibility of the positive electrode active material powder with a binder is not good, and binding properties with a positive electrode collector described hereinafter is deteriorated, thereby causing deterioration of discharge capacity and cycling characteristics of the nonaqueous electrolyte secondary battery. Therefore, it is not preferred. When the number of particles having a particle diameter of more than 5 µm out of particles in the positive electrode active material powder is 10% or more, it is not preferable since the resultant nonaqueous electrolyte secondary battery is insufficiently in a high output at a high current rate. When the number of graphite particles having a maximum diameter of less than 0.1 µm in the graphite powder is 10% or more, it is not preferred in view of energy density in a positive electrode described hereinafter, and operability such as binding properties with the positive electrode collector in production of the positive electrode. When the number of graphite particles having a maximum diameter of more than 10 µm in the graphite powder is 10% or more, it is not preferable since an internal resistance value in the positive electrode described hereinafter increases, discharge capacity of the nonaqueous electrolyte secondary battery is deteriorated and the battery is insufficient in a high output at a high current rate.

The average particle diameter of primary particles and aggregated particles of primary particles in the positive electrode active material powder is preferably 0.1 µm or more and 3 µm or less so as to further enhance discharge capacity of the nonaqueous electrolyte secondary battery. Herein, as the average particle diameter, a value measured by the scanning electron micrograph is used. That is, 50 particles are selected randomly from primary particles and aggregated particles of primary particles on the micrograph and each particle diameter is measured, and the measured average value may be taken as the above particle diameter. The average particle diameter is preferably 0.1 µm or more and 2 µm or less, and more preferably 0.1 µm or more 1.5 µm or less. By adjusting the average value particle diameter within the above range, it is possible to obtain a powder for a positive electrode for a nonaqueous electrolyte secondary battery, which can exhibit a high discharge capacity and also exhibit a high output at a high current rate.

The average value of a maximum particle diameter of graphite particles in the graphite powder, is preferably 1 µm or more and 6 µm or less, so as to further enhance discharge capacity of the nonaqueous electrolyte secondary battery. Herein, as the average value, a value measured by the scanning electron micrograph is used. That is, 50 particles are selected randomly from graphite particles on the micrograph and a particle diameter, which exhibits a maximum value in each particle diameter of graphite particles (hereinafter may be referred to as a maximum diameter of graphite particles) is measured, and the average value is used. By adjusting an average value of the maximum diameter of graphite particles to 1 µm or more and 4 µm or less, it is possible to obtain a powder for a positive electrode for a nonaqueous electrolyte secondary battery, which can exhibits a high output at a high current rate.

The graphite powder in the present invention is preferably in the form of scaly graphite particles. When the graphite powder has a scaly shape, conductivity of the positive electrode described hereinafter can be enhanced.

The composition of the positive electrode active material powder in the present invention includes the following representative compositions, that is, the composition represented by the formula (1) and the composition represented by the formula (2).

Liₓ₁Ni_{1-y1}M¹_{y1}O₂ (1)

(in the formula (1), x1 and y1 satisfy 0.9 ≦ x1 ≦ 1.2 and 0 ≦ y1 ≦ 0.5, respectively, and M¹ is Co)

Herein, x1 is preferably 1.0 or more and 1.1 or less, and more preferably 1.0 or more and 1.05 or less, so as to further increase the discharge capacity. For the same purpose, y1 is preferably 0.05 or more and 0.3 or less, and more preferably 0.1 or more 0.2 or less.

Liₓ₂Ni_{1-y2}M²_{y2}O₂ (2)

(in the formula (2), x2 and y2 satisfy 0.9 ≦ x2 ≦ 1.2 and 0.3 ≦ y2 ≦ 0.9, respectively, and M² is Co and Mn).

So as to further increase the discharge capacity, x2 is preferably 1.0 or more and 1.1 or less, and more preferably 1.0 or more and 1.05 or less. For the same purpose, y2 is preferably 0.4 or more and 0.8 or less, and more preferably 0.5 or more and 0.7 or less. Regarding M², Co:Mn is preferably within a range from 50:50 to 20:80, and more preferably from 40:60 to 30:70, in terms of a molar ratio.

As long as the effects of the present invention are not impaired, a portion of elements M¹ and M² described above may be substituted with elements such as B, Al, Ga, In, Si, Ge, Sn, Mg, Sc, Y, Ti, Zr, Hf, V, Nb, Ta, Cr, Mo, W, Tc, Fe, Ru, Rh, Ir, Pd, Cu, Ag, and Zn.

With respect to the positive electrode active material powder of the present invention, a crystal structure identified by the measurement of powder X-ray diffraction is usually a NaFeO₂ type crystal structure.

The powder for a positive electrode of the present invention may further contain a nongraphite carbonaceous material. The nongraphite carbonaceous material includes such as carbon black and acetylene black. The powder for a positive electrode of the present invention may further contain a fibrous carbon material.

When the powder for a positive electrode contains a fibrous carbon material, a/b is usually from 20 to 1000, when 'a' denotes a length of a fibrous carbon material, and 'b' denotes a diameter of a cross section which is perpendicular to a length direction of the material. In the fibrous carbon material, electric conductivity thereof is preferably as high as possible. Electric conductivity of the fibrous carbon material is measured with respect to a sample formed so as to adjust density of a fibrous carbon material within a range of 1.0 to 1.5 g/cm². In that case, electric conductivity is usually 1 S/cm or more, and preferably 2 S/cm or more.

The surface of particles of the positive electrode active material powder of the present invention, as a core material, may be further coated with a compound containing one or more elements selected from B, Al, Ga, In, Si, Ge, Sn, Mg, and transition metal elements. Among these elements, one or more elements selected from B, Al, Mg, Co, Cr, Mn, and Fe are preferred, and Al is more preferred in view of operability. The compound includes oxides, hydroxides, oxyhydroxides, carbonates, nitrates, organic acid salts of the above elements, or mixtures thereof. Among these, oxides, hydroxides, oxyhydroxides, carbonates, or mixtures thereof are preferred.

Next, a method of producing a positive electrode active material powder of the present invention will be described.

The positive electrode active material powder of the present invention can be produced by calcining a metal compound mixture which can be converted into a positive electrode active material powder of the present invention by calcining. That is, the positive electrode active material powder can be produced by weighing compounds containing a corresponding metal element so as to have a predetermined composition, mixing them, and calcining the resultant metal compound mixture. For example, a complex oxide represented by Li_{1.08}[Ni_{0.35}Mn_{0.44}C_{0.21}]O₂ as one of preferred compositions can be obtained by calcining a metal compound mixture which is obtained after weighing lithium hydroxide, dinickel trioxide, manganese carbonate and cobalt oxide in a molar ratio Li:Ni:Mn:Co of 1.08:0.35:0.44:0.21, and mixing.

As the compound containing a metal element, for example, it is possible to use oxides of compounds containing a metal element such as Li, Al, Ni, Mn, Co and Fe, or those which can be decomposed and/or oxidized at high temperature to be oxides, such as hydroxides, oxyhydroxides, carbonates, nitrates, acetates, halide, oxalates and alkoxides. Among these compounds, a compound containing Li is preferably a hydroxide and/or a carbonate, a compound containing Al is preferably a hydroxide and/or an oxide, a compound containing Ni is preferably a hydroxide and/or an oxide, a compound containing Mn is preferably a carbonate and/or an oxide, a compound containing Co is preferably an oxide and/or a hydroxide, and a compound containing Fe is preferably a hydroxide and/or an oxide. A complex compound containing two or more kinds of the above-mentioned metal elements may be used as the compound containing a metal element.

The metal compound mixture before calcining may further contain a compound containing boron so as to enhance crystallinity of the positive electrode active material powder. The content of the compound containing boron may be usually 0.00001 mol or more and 5 mol% or less in terms of boron conversion based on the total mols of metal elements excluding lithium in the metal compound mixture. The content is preferably 0.0001 mol% or more and 3 mol% or less in terms of boron conversion. The compound containing boron includes boron oxide and boric acid, and boric acid is preferable. Boron further contained in the metal compound mixture may be remained in the positive electrode active material powder of the present invention after calcining, or may be removed by washing, vaporization or the like.

Mixing of the compound containing the metal element may be carried out by either dry mixing or wet mixing. However, simple dry mixing is preferable. Dry mixing is carried out using a V-type mixer, a W-type mixer, a ribbon mixer or a drum mixer, or a dry ball mill.

In view of acceleration of a solid phase reaction upon calcining, the average particle diameter of the metal compound mixture on a volume basis is preferably a value within a range of 1 µm or more and 20 µm or less. Herein, the average particle diameter of the metal compound mixture on a volume basis means a particle diameter (D50) which can be determined when 50% of the particles are accumulated from the finer particle side in an accumulative particle size distribution on a volume basis, which is measured by a laser diffraction particle size analyzer.

The metal compound mixture was optionally compressed and molded, and then calcined by retaining at a temperature within a range from 700°C or higher and 1200°C or lower for 2 to 30 hours to obtain a calcined product. Upon calcining, as long as a calcining vessel containing the metal compound mixture is not damaged, it is preferred to quickly heat to a retention temperature. The calcining atmosphere varies depending on the composition, and air, oxygen, nitrogen, argon or a mixture gas thereof can be used. The calcining atmosphere is preferably an atmosphere containing oxygen.

The calcined product is ground using a grinder, and thus a positive electrode active material powder of the present invention can be obtained. It is preferred to use a jet mill as the grinder in view of adjusting the particle diameter of 90% of more of particles out of primary particles and aggregated particles of primary particles to 0.01 µm or more and 5 µm or less. In the case of the jet mill, since particles constituting the calcined product are accelerated by a jet stream and are ground by collision of particles with each other and also collision causes less strain of a crystal structure and it is easy to grind within a short time, generation of particles other than the objective particles in the present invention can be suppressed. Particles may be ground using a vibrating mill or a dry ball mill in place of the jet mill. In that case, the process may become complicated in some cases for requiring further air classification operation or the like. It is more preferred to use, as the jet mill, a fluidized jet mill equipped with a classifier built thereinto. The jet mill includes a counter jet mill (trade name, manufactured by Hosokawa Micron Group).

The powder for a positive electrode of the present invention can be produced by mixing a positive electrode active material powder which comprises primary particles and aggregated particles of primary particles, wherein 90% or more of primary particles and aggregated particles of primary particles in the powder has a particle diameter of 0.01 µm or more and 5 µm or less, and a graphite powder which comprises graphite particles, wherein 90% or more of graphite particles in the powder has a particle diameter of 0.1 µm or more and 10 µm or less as a maximum particle diameter. Mixing can be carried out using an apparatus such as a V-type mixer, a W-type mixer, a ribon mixer, a drum mixer, or a dry ball mill. It is preferred to use a V-type mixer, a W-type mixer, a ribon mixer, or a drum mixer in view of suppression of promotion of grinding.

In view of storage characteristics and operability of the positive electrode active material powder, the BET specific surface area of the positive electrode active material powder is preferably 1 m²/g or more and 7 m²/g or less, more preferably 2.5 m²/g or more and 7 m²/g or less, and still more preferably 3 m²/g or more and 4 m²/g or less.

The BET specific surface area of the graphite powder is preferably 12 m²/g or more and 20 m²/g or less, and more preferably 16 m²/g µm or more and 19 m²/g or less so as to obtain a powder for a positive electrode for a nonaqueous electrolyte secondary battery, which can exhibit a high output at a high current rate.

In the production of the powder for a positive electrode of the present invention, regarding a weight ratio of the positive electrode active material powder to the graphite powder, the amount of the graphite powder is usually 5 parts by weight or more and 20 parts by weight or less based on 100 parts by weight of the positive electrode active material powder. The powder may be further mixed with a nongraphite carbonaceous material. The nongraphite carbonaceous material includes carbon black, and acetylene black. Since carbon black and acetylene black are in the form of fine particles and have a large surface area, internal conductivity of a positive electrode can be enhanced and charge/discharge efficiency and rate characteristics can be improved by adding a small amount of carbon black and acetylene black to a positive electrode mix described hereinafter. When carbon black and acetylene black are excessively added, binding properties of the positive electrode mix with the positive electrode collector via a binder deteriorate and it causes increase of internal resistance on the contrary. Accordingly, when mixed with the nongraphite carbonaceous material, the contents of the graphite powder and the nongraphite carbonaceous material are 5 parts by weight or more and 20 parts by weight or less based on 100 parts by weight of the positive electrode active material powder. The powder may also be further mixed with a fibrous carbon material. Specific examples of the fibrous carbon material include a graphitized carbon fiber and a carbon nanotube. The carbon nanotube may be either a single-wall or a multi-wall carbon nanotube. The fibrous carbon material may be prepared by grinding a commercially available product. Grinding may be carried out by either a dry or wet grinding method. Dry grinding includes grinding using a ball mill, a rocking mill or a planetary ball mill, and wet grinding includes grinding using a ball mill or Dispermat. The proportion of the fibrous carbon material upon mixing is usually 0.1 part by weight or more and 10 parts by weight or less based on 100 parts by weight of the positive electrode active material powder.

Next, the positive electrode mix of the present invention will be described. The positive electrode mix of the present invention includes a powder for a positive electrode or a powder for a positive electrode obtained by the method for producing a powder for a positive electrode and a binder. That is, the positive electrode mix comprises, a positive electrode active material powder which comprises primary particles and aggregated particles of primary particles, wherein 90% or more of primary particles and aggregated particles of primary particles in the powder has a particle diameter of 0.01 µm or more and 5 µm or less,
and a graphite powder which comprises graphite particles, wherein 90% or more of graphite particles in the powder has a particle diameter of 0.1 µm or more and 10 µm or less as a maximum particle diameter, and a binder. The positive electrode active material powder and the graphite powder in the positive electrode mix of the present invention may be respectively a positive electrode active material powder in the present invention, and a graphite powder in the present invention.

A thermoplastic resin can be used as the binder in the positive electrode mix of the present invention, and examples thereof include fluororesins such as polyvinylidene fluoride (hereafter may be referred to as PVDF), polytetrafluoroethylene (hereafter may be referred to as PTFE), an ethylene tetrafluoride/propylene hexafluoride/vinylidene fluoride copolymer, a propylene hexafluoride/vinylidene fluoride copolymer, and an ethylene tetrafluoride/perfluorovinyl ether copolymer; and polyolefin resins such as polyethylene and polypropylene. These thermoplastic resins may be used alone, or in combination of two or more kinds. It is preferred that a fluororesin and a polyolefin resin are used as the binder and that the positive electrode mix contains the fluororesin of 1 to 10% by weight based on the positive electrode mix and the polyolefin resin of 0.1 to 2% by weight based on the positive electrode mix, thereby obtaining a positive electrode mix having excellent binding properties with the positive electrode collector.

The binder may be dissolved in an organic solvent. Here, the organic solvent includes amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and 1-methyl-2-pyrrolidone.

The method for producing a positive electrode mix of the present invention include the following methods. That is, a method of mixing a powder for a positive electrode and a binder; a method of mixing a positive electrode active material powder, a graphite powder and a binder; a method of mixing a positive electrode active material powder, a graphite powder and a nongraphite carbonaceous material and a binder; a method of mixing a positive electrode active material powder, a graphite powder, a fibrous carbon material and a binder; and a method of mixing a positive electrode active material powder, a graphite powder, a nongraphite carbonaceous material, a fibrous carbon material and a binder can be included. The binder may be dissolved in an organic solvent.

Next, a method for producing a positive electrode for a nonaqueous electrolyte secondary battery will be described. The positive electrode can be produced by supporting a positive electrode mix on a positive electrode collector.

As the positive electrode collector, Al, Ni and stainless steel can be used. Among these, Al is preferred in that it is easy to form into a thin film and is inexpensive. A method of supporting a positive electrode mix on the positive electrode collector includes a pressure molding method, and a method of adding solvent to form a paste, applying the paste on the collector, and fixing to the collector through pressing or the like after drying. A method of applying a positive electrode mix on a positive electrode collector includes a slit die coating method, a screen coating method, a curtain coating method, a knife coating method, a gravure coating method, and an electrostatic spray coating method. The positive electrode for a nonaqueous electrolyte secondary battery in the present invention can be produced by the method described above.

Next, the nonaqueous electrolyte secondary battery including a positive electrode for a nonaqueous electrolyte secondary battery of the present invention will be described by way of a lithium secondary battery as an example of the battery.

The lithium secondary battery can be produced by encasing an electrode group, which is obtained by laminating and winding a separator, a negative electrode including a negative electrode collector and a negative electrode mix supported on the negative electrode collector, and the above positive electrode in a battery case, and then impregnating with an electrolyte solution containing an electrolyte and an organic solvent.

The shape of the electrode group may include, for example, a shape in which a cross section, obtained by cutting the electrode group in a direction perpendicular to a winding axis, has a shape of such as circle, oval, rectangle, or chamfered rectangle. The shape of the battery may include such as a paper-type, coin-type, cylinder-type or square-type battery.

As the negative electrode those obtained by supporting a negative electrode mix containing a material capable of doping/dedoping lithium ions on a negative electrode collector, lithium metal or a lithium alloy can be used. The material capable of doping/dedoping lithium ions specifically includes carbonaceous materials such as natural graphite, artificial graphite, cokes, carbon black, pyrolytic carbon, carbon fiber and a calcined organic polymer compound; and chalcogen compounds capable of doping/dedoping lithium ions at a lower electric potential than that of the positive electrode, such as oxide and sulfide. It is preferred to use the carbonaceous material containing a graphite material as a main component, such as natural and artificial graphite, since a lithium secondary battery has high potential flatness and low average discharge potential. The carbonaceous material can be in any form, for example, flake like natural graphite, sphere like mesocarbon micro-beads, fiber like graphitized carbon fiber, and aggregate of fine powder.

It is preferred to use a negative electrode mix containing polyethylene carbonate in the case where the liquid electrolyte does not contain ethylene carbonate described hereinafter, since cycling characteristics and large current discharge characteristics of the resultant battery are improved in some cases.

The negative electrode mix may contain a binder, if necessary. The binder includes thermoplastic resins, specifically, PVDF, thermoplastic polyimide, carboxymethyl cellulose, polyethylene, and polypropylene.

The chalcogen compound used as the material capable of doping/dedoping lithium ions contained in the negative electrode mix, such as oxide and sulfide, includes crystalline or amorphous oxide mainly containing the Group 13, 14 or 15 elements in the Periodic Table, specifically, such as an amorphous compound mainly containing a tin compound. These chalcogen compounds can contain carbonaceous material as a conductive material, if necessary.

The negative electrode collector includes such as Cu, Ni or stainless steel, and Cu is preferred in that it is less likely to form an alloy with lithium and is easily formed into a thin film.

A method of supporting a negative electrode mix on the negative electrode collector includes a pressure molding method, and a method of adding solvent to form a paste, applying the paste on the negative electrode collector, and fixing to the collector through pressing or the like after drying, similar to the case of the positive electrode.

As the separator, for example, there can be used materials composed of a polyolefin resin such as polyethylene or polypropylene, a fluororesin, and a nitrogen-containing aromatic polymer in the form of a porous material, a nonwoven fiber or a woven fiber. The separator may be made of two or more kinds of these materials. The separator includes for example, separators described in Japanese Unexamined Patent Publication No. 2000-30686 and Japanese Unexamined Patent Publication No. 10-324758. The thickness of the separator is preferably as thin as possible, as long as the mechanical strength is maintained, and is preferably from about 10 to 200 µm, more preferably from about 10 to 30 µm, since a volume energy density of a battery increases and internal resistance decreases.

The electrolyte in the electrolyte solution include lithium salts such as LiClO₄, LiPF₆, LiAsF₆, LiSbF₆, LiBF₄, LiCF₃SO₃, LiN(SO₂CF₃)₂, LiC(SO₂CF₃)₃, Li₂B₁₀Cl₁₀, a lower aliphatic carboxylic acid lithium salt, LiAlCl₄, and a mixture of two or more kinds may be used. It is preferred to use, as the lithium salt, at least one kind selected from the group consisting of LiPF₆, LiAsF₆, LiSbF₆, LiBF₄, LiCF₃SO₃, LiN(SO₂CF₃)₂ and LiC(SO₂CF₃)₃, each containing lithium, among these lithium salts.

In the electrolyte solution, the organic solvent includes carbonates such as propylene carbonate, ethylene carbonate, dimethyl carbonate, diethyl carbonate, ethylmethyl carbonate, 4-trifluoromethyl-1,3-dioxolan-2-one and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran and 2-methyltetrahydrofuran; esters such as methyl formate, methyl acetate and γ-butyrolactone; nitriles such as acetonitrile and butyronitrile; amides such as N,N-dimethylformamide and N,N-dimethylacetoamide; carbamates such as 3-methyl-2-oxazoline; sulfur-containing compounds such as sulfolane, dimethyl sulfoxide and 1,3-propanesultone; and those in which a fluorine substituent group is further introduced into the above organic solvents. Usually, two or more kinds of these organic solvents are used in combination. Among these organic solvents, a mixture solvent containing carbonates is preferred and a mixture solvent of cyclic carbonate and acyclic carbonate, or a mixture solvent of cyclic carbonate and ethers are more preferred.

The mixture solvent of cyclic carbonate and acyclic carbonate is preferably a mixture solvent containing ethylene carbonate, dimethyl carbonate and ethylmethyl carbonate, since it expands an operation temperature range and has excellent load characteristics, and is persistent even when a graphite material such as natural graphite or artificial graphite is used as a negative electrode active material.

It is preferred to use an electrolyte solution containing a lithium salt containing fluorine, such as LiPF₆, and an organic solvent having a fluorine substituent group, since an excellent safety improvement effect is obtained. A mixture solvent containing ethers having a fluorine substituent group, such as pentafluoropropylmethyl ether and 2,2,3,3-tetrafluoropropyldifluoromethyl ether, and dimethyl carbonate is more preferred, since it has excellent large current discharge characteristics.

A solid electrolyte may be used in place of the electrolyte solution.

As the solid electrolyte, for example, polymer electrolytes such as a polyethylene oxide polymer compound and a polymer compound containing at least one of a polyorganosiloxane chain and a polyoxyalkylene chain can be used. A so-called gel type electrolyte of a polymer keeping a nonaqueous electrolyte solution can also be used. When using a sulfide electrolyte such as Li₂S-SiS₂, Li₂S-GeS₂, Li₂S-P₂S₅ or Li₂S-B₂S₃, and an inorganic compound electrolyte containing a sulfide such as Li₂S-SiS₂-Li₃PO₄ or Li₂S-SiS₂-Li₂SO₄, safety can be further enhanced.

The present invention will be illustrated in more detail below by way of Examples.

### (1) Measurement of Particle Diameter of Particles of Positive Electrode Active Material Powder

A scanning electron micrograph (SEM micrograph) was taken and 50 particles were selected at random from primary particles and aggregated particles of primary particles on the micrograph, and then each particle diameter was measured.

### (2) Measurement of Maximum Value of Particle Diameter of Particles of Graphite Powder

A scanning electron micrograph (SEM micrograph) was taken and 50 particles were selected at random from graphite particles on the micrograph, and then each particle diameter, which exhibits a maximum value in particle diameter of each graphite particle, was measured.

### (3) Measurement of BET Specific Surface Area of Positive Electrode Active Material Powder and Graphite Powder

In a nitrogen gas flow at 150°C for 15 minutes, 1 g of a powder was dried, and then a BET specific surface area was measured using FlowSorb II2300 manufactured by Micromeritics Instrument Corporation.

### (4) Production of Plate-Shaped Battery for Charge/Discharge Test

A mixture of a positive electrode active material powder, graphite powder, acetylene black, and a solution of PVDF as a binder in 1-methyl-2-pyrrolidone (hereinafter may be referred to as NMP) were mixed and kneaded in a weight ratio positive electrode active material powder: graphite powder:acetylene black:PVDF of 87:9:1:3, and a positive electrode mix paste was obtained. After the resultant positive electrode mix was applied on a 20 µm thick Al foil serving as a positive electrode collector, the coated Al foil was dried at 60°C using a hot air dryer for one hour, vacuum-dried at 50°C for 8 hours, subjected to a compaction treatment using a roll press and then cut into pieces with a size of 1.5 cm × 2 cm, and a positive electrode was obtained. The weight of the resultant positive electrode was measured, the weight of a positive electrode mix was calculated by subtracting the weight of the Al foil from that of the positive electrode, and then the weight of the positive electrode active material powder was calculated from the weight ratio of the pasty positive electrode mix.

The resultant positive electrode, an electrolyte solution prepared by dissolving 1 mol/liter of LiPF₆ in a mixed solution of ethylene carbonate (hereinafter may be referred to as EC), dimethyl carbonate (hereinafter may be referred to as DMC) and ethylmethyl carbonate (hereinafter may be referred to as EMC) in a mixing ratio of 30:35:35 (volume ratio) (hereinafter may be referred to as LiPF₆/EC + DMC + EMC), a polyethylene porous film as a separator, and a counter electrode and a reference electrode made of metallic lithium were assembled, and a plate-shaped battery was obtained.

### Example 1

### (1) Synthesis of Positive Electrode Active Material Powder

Nickel hydroxide (manufactured by KANSAI CATALYST CO., LTD.), manganese oxide (manufactured by JAPAN PURE CHEMICAL CO., LTD.), lithium carbonate (manufactured by Honjo Chemical Corporation), cobalt oxide (manufactured by Seido Chemical Industry Co., Ltd.) and boric acid (manufactured by Yoneyama Chemical CO., LTD) were weighed in a molar ratio Li:Ni:Mn:Co:B of 1.07:0.35:0.44:0.21:0.03 and then ground and mixed by a dry ball mill using alumina balls of 15 mmΦ as media for 4 hours (peripheral velocity: 0.7 m/s), and a powder was obtained. The resultant powder was placed in a tunnel-shaped continuous furnace and then calcined in the air at 1,040°C for 4 hours to obtain a calcined product. The calcined product was coarsely ground using a roll crusher and then ground under the conditions of a powder feed amount of 2 kg/h and a pressure of 4 kg/cm² using a jet mill (manufactured by Nippon Pneumatic Mfg. Co., Ltd., spiral jet mill, Model NPK100) to obtain a ground powder. Coarse particles were removed from the ground powder using a sieve having an opening diameter of 45 µm to obtain a positive electrode active material powder 1. It was found that 90% or more of particles has a particle diameter of 0.01 µm or more and 5 µm or less in the SEM micrograph of the positive electrode active material powder 1. The average particle diameter was 1.4 µm. The BET specific surface area of the powder was 3.3 m²/g.

### (2) Evaluation of Charge/Discharge Performances of Lithium Secondary Battery

A plate-shaped battery was produced by using the positive electrode active material powder 1 as a positive electrode active material powder, and using a powder composed of scaly graphite particles in which 90% or more out of constituting particles have a maximum particle diameter of 0.1 µm or more and 10 µm or less, an average value of a maximum diameter of particles is 3 µm and a BET specific surface area is 18 m²/g as a graphite powder, and a charge/discharge test was carried out under the following conditions by way of constant current constant voltage charge and constant current discharge. The results are shown in Table 1.

### Charge/Discharge Conditions:

A current value of IC is calculated by multiplying the weight of the positive electrode active material powder obtained above using 1C = 150 mA/g as a current value per unit weight of a positive electrode active material.

Charging was carried out under the conditions of a maximum charging voltage of 4.3 V, a charging time of 8 hours, a charging current of 0.2C, while discharging was carried out under the conditions of a minimum discharging voltage of 3.0 V and a discharging current of 0.2C, 1C, 5C and 10C. Charging was carried out under the same conditions before each discharge test.

### Example 2

### (1) Synthesis of Positive Electrode Active Material Powder

Nickel hydroxide (manufactured by KANSAI CATALYST CO., LTD.), manganese oxide (manufactured by JAPAN PURE CHEMICAL CO., LTD.), lithium carbonate (manufactured by Honjo Chemical Corporation), cobalt oxide (manufactured by Seido Chemical Industry Co., Ltd.) and boric acid (manufactured by Yoneyama Chemical CO., LTD) were weighed in a molar ratio Li:Ni:Mn:Co:B of 1.08:0.35:0.44:0.21:0.03 and then ground and mixed by a dry ball mill using alumina balls of 15 mmΦ as media for 4 hours (peripheral velocity: 0.7 m/s), and a powder was obtained. The resultant powder was placed in a tunnel-shaped continuous furnace and then calcined in the air at 1,040°C for 4 hours to obtain a calcined product. The calcined product was ground by a dry ball mill using alumina balls of 15 mmΦ as media for 13 hours (peripheral velocity: 0.7 m/s) and then air-classified under the conditions of a powder feed amount of 1 kg/h, an air volume of 20 m³/min and rotar rotation of 2,000 rpm using an air classifier (spedic classifier SPC-250, manufactured by SEISHIN ENTERPRISE CO., LTD.) to remove coarse particles, and a positive electrode active material powder 2 was obtained. It was found that 90% or more of particles has a particle diameter of 0.01 µm or more and 5 µm or less in the SEM micrograph of the positive electrode active material powder 2. An average particle diameter was 1.6 µm. A BET specific surface area of the powder was 2.3 m²/g.

### (2) Evaluation of Charge/Discharge Performances of Lithium Secondary Battery

A plate-shaped battery was produced by using the positive electrode active material powder 2 as a positive electrode active material powder, and using a powder composed of scaly graphite particles in which 90% or more of particles out of constituting particles have a maximum diameter of 0.1 µm or more and 10 µm or less, an average value of a maximum diameter of particles is 6 µm and a BET specific surface area is 14 m²/g as a graphite powder, and a charge/discharge test was carried out under the following conditions by way of constant current constant voltage charge and constant current discharge. The results are shown in Table 1.

### Example 3

In the same manner as in Example 1, except that the molar ratio of each element of Li:Ni:Mn:Co:B was adjusted to 1.10:0.36:0.42:0.21:0.03, a positive electrode active material powder 3 was obtained. The results of the SEM micrograph of the positive electrode active material powder 3 and the results of the BET specific surface area are similar to that of Example 1. Using the positive electrode active material powder 3, a plate-shaped battery was produced in the same manner as in Example 1 and a charge/discharge test was carried out under the conditions by way of constant current constant voltage charge and constant current discharge in the same manner as in Example 1. The same results as in Example 1 were obtained.

### Example 4

In the same manner as in Example 2, except that the molar ratio of each element of Li:Ni:Mn:Co:B was adjutsted to 1.11:0.36:0.42:0.21:0.03, a positive electrode active material powder 4 was obtained. The results of the SEM micrograph of the positive electrode active material powder 4 and the results of the BET specific surface area are similar to that of Example 2. Using the positive electrode active material powder 4, a plate-shaped battery was produced in the same manner as in Example 1 and a charge/discharge test was carried out under the conditions by way of constant current constant voltage charge and constant current discharge in the same manner as in Example 1. The same results as in Example 2 were obtained.

### Comparative Example 1

### Evaluation of Charge/Discharge Performances of Lithium Secondary Battery

A plate-shaped battery was produced by using the positive electrode active material powder 2 as a positive electrode active material powder, and using a powder composed of scaly graphite particles in which 54% of particles out of constituting particles has a maximum diameter of 0.1 µm or more and 10 µm or less, an average value of a maximum diameter of particles is 13 µm and a BET specific surface area is 11 m²/g as a graphite powder, and a charge/discharge test was carried out under the same conditions as in Example 1 by way of constant current constant voltage charge and constant current discharge. The results are shown in Table 1.

**[Table 1]**

| Examples | Positive electrode active material powder | Graphite powder | Discharge capacity mAh/g | | | | Rate characteristics against 0.2C (%) | | |
|---|---|---|---|---|---|---|---|---|---|
| | Average particle diameter (Specific surface area) | Average value of maximum particle diameter (Specific surface area) | 0.2C | 1C | 5C | 10C | 1C | 5C | 10C |
| Example 1 | 1.3µm (3.3m²/g) | 3µm (18m²/g) | 153 | 143 | 119 | 87 | 93 | 78 | 57 |
| Example 2 | 1.6µm (2.3m²/g) | 6µm (14m²/g) | 154 | 142 | 103 | 28 | 92 | 67 | 18 |
| Comparative Example 1 | 1.6µm (2.3m²/g) | 13µm (11m²/g) | 151 | 124 | 13 | 0 | 82 | 9 | 0 |

From data of the discharge capacity and data of rate characteristics against 0.2C in Example 1, Example 2 and Comparative Example 1 shown in Table 1, it is found that batteries using the positive electrode active powder of Example 1 exhibits a large discharge capacity and a high output even when the discharging current increases (for example, 10C).

When the powder for a positive electrode and the positive electrode mix including the powder for a positive electrode and a binder of the present invention is used for a nonaqueous electrolyte secondary battery since it can exhibit a high discharge capacity and also can exhibit a high output at a high current rate, the powder for a positive electrode and the positive electrode mix including the powder for a positive electrode of the present invention can be preferably used for a nonaqueous electrolyte secondary battery, particularly for applications requiring a high output at a high current rate, that is, automobile applications, and power tool applications such as electric tools, and thus the present invention is industrially very useful.

## Claims

1. A powder for a positive electrode comprising, a positive electrode active material powder which comprises primary particles and aggregated particles of primary particles, wherein 90% or more of primary particles and aggregated particles of primary particles in the powder has a particle diameter of 0.01 µm or more and 5 µm or less,
and a graphite powder which comprises graphite particles, wherein 90% or more of graphite particles in the powder has a particle diameter of 0.1 µm or more and 10 µm or less as a maximum particle diameter.

2. The powder for a positive electrode according to claim 1, wherein the average particle diameter of primary particles and aggregated particles of primary particles in the positive electrode active material powder is 0.1 µm or more and 3 µm or less.

3. The powder for a positive electrode according to claim 1 or 2, wherein an average value of a maximum particle diameter of graphite particles in the graphite powder is 1 µm or more and 6 µm or less.

4. The powder for a positive electrode according to any one of claims 1 to 3, wherein graphite particles are scaly graphite particles.

5. The powder for a positive electrode according to any one of claims 1 to 4, wherein the composition of the positive electrode active material is represented by the formula (1):
Liₓ₁Ni_{1-y1}M¹_{y1}O₂ (1)
(in the formula (1), x1 and y1 satisfy 0.9 ≦ x1 ≦ 1.2 and 0 ≦ y1 ≦ 0.5, respectively, and M¹ is Co).

6. The powder for a positive electrode according to any one of claims 1 to 4, wherein the composition of the positive electrode active material is represented by the formula (2):
Liₓ₂Ni_{1-y2}M²_{y2}O₂ (2)
(in the formula (2), x2 and y2 satisfy 0.9 ≦ x2 ≦ 1.2 and 0.3 ≦ y2 ≦ 0.9, respectively, and M² is Co and Mn).

7. The powder for a positive electrode according to any one of claims 1 to 6, further containing a nongraphite carbonaceous material.

8. The powder for a positive electrode according to any one of claims 1 to 7, further containing a fibrous carbon material.

9. A method for producing a powder for a positive electrode comprising mixing
a positive electrode active material powder which comprises primary particles and aggregated particles of primary particles, wherein 90% or more of primary particles and aggregated particles of primary particles in the powder has a particle diameter of 0.01 µm or more and 5 µm or less, and
a graphite powder which comprises graphite particles, wherein 90% or more of graphite particles in the powder has a particle diameter of 0.1 µm or more and 10 µm or less as a maximum particle diameter.

10. The method for producing a powder for a positive electrode according to claim 9, wherein a BET specific surface area of the positive electrode active material powder is 1 m²/g or more and 7 m²/g or less.

11. The method for producing a powder for a positive electrode according to claim 9 or 10, wherein a BET specific surface area of the graphite powder is 12 m²/g or more and 20 m²/g or less.

12. The method for producing a powder for a positive electrode according to any one of claims 9 to 11, wherein the amount of the graphite powder is 5 parts by weight or more and 20 parts by weight or less based on 100 parts by weight of the positive electrode active material powder.

13. The method for producing a powder for a positive electrode according to any one of claims 9 to 12, further mixing a nongraphite carbonaceous material.

14. The method for producing a powder for a positive electrode according to any one of claims 9 to 13, further mixing a fibrous carbon material.

15. A positive electrode mix, comprising the powder for a positive electrode according to any one of claims 1 to 8 or the powder for a positive electrode obtained by the production method according to any one of claims 9 to 14, and a binder.

16. A positive electrode for a nonaqueous electrolyte second battery, comprising the powder for a positive electrode according to any one of claims 1 to 8 or the powder for a positive electrode obtained by the production method according to any one of claims 9 to 14, and a binder.

17. A nonaqueous electrolyte secondary battery, comprising the positive electrode for a nonaqueous electrolyte secondary battery according to claim 16.
